Europäisches Patentamt

European Patent Office

Office européen des brevets

(19)

(11) Publication number: **0 020 061**
**B1**

(12) **EUROPEAN PATENT SPECIFICATION**

(45) Date of publication of patent specification: **16.11.83**

(51) Int. Cl.³: **H 01 M 4/64, H 01 M 10/39**

(21) Application number: **80301611.2**

(22) Date of filing: **16.05.80**

(54) Sodium sulphur cells, cathode structures therefor, and the manufacture of such cells and structures.

(30) Priority: **24.05.79 GB 7918126**

(43) Date of publication of application:
**10.12.80 Bulletin 80/25**

(45) Publication of the grant of the patent:
**16.11.83 Bulletin 83/46**

(84) Designated Contracting States:
**DE FR**

(56) References cited:
**FR - A - 2 341 950**
**US - A - 3 925 098**
**US - A - 3 991 169**
**US - A - 4 070 527**
**US - A - 4 115 528**

(73) Proprietor: **CHLORIDE SILENT POWER LIMITED**
**52 Grosvenor Gardens**
**London, SW1W 0AU (GB)**

(72) Inventor: **Brennan, Michael Patrick Joseph**
**30 Chester Road**
**Helsby, via Warrington WA6 0EZ (GB)**

(74) Representative: **Rennie, Ian Malcolm et al,**
**BOULT, WADE & TENNANT 27 Furnival Street**
**London EC4A 1PQ (GB)**

Courier Press, Leamington Spa, England.

# Sodium sulphur cells, cathode structures therefor, and the manufacture of such cells and structures

This invention relates to sodium sulphur cells and to cathode structures therefor and to their manufacture.

In a sodium sulphur cell, a solid electrolyte material which will conduct sodium ions, for example beta-alumina, separates sodium, constituting the anode, from a cathode containing the cathodic reactant comprising sulphur and sodium polysulphides. To provide electronic conductivity in the cathodic region, this region normally contains a conductive fibre matrix, e.g. a carbon fibre matrix which is impregnated with the cathodic reactant. Reference may be made to U.S. Specifications Nos. 4,052,535; 4,076,902; 4,118,545 and 4,176,447 as examples of such cells.

The cathode matrix structure desirably has an electrical resistance which is very low and, for this reason, use has been made of a carbon felt formed of synthetic fibres, for example rayon fibres, which have been felted by a needle-punching operation, the felted sheet then being carbonised. The material known as Le Carbone RVC 4000 is such a material which has been extensively used in sodium sulphur cells.

More recently carbon fibres manufactured from pitch have become available. The pitch base route for manufacture of carbon fibres is more efficient and produces a lower cost product than the carbonisation of fibres such as rayon. Such pitch-based fibres however heretofore have not been entirely satisfactory in sodium sulphur cells because of the form in which such fibres are commercially available.

There are at present two basic types of pitch-based carbon fibre available, differing in type of pitch and precursor employed. Historically the first such fibres were made of non-mesophase pitch. Reference may be made for example to British Patent Specification No. 1091890 for a description of one process for producing such fibres. Fibres produced from this material resemble vitreous carbon and typically have a tensile modulus of $5.5 \times 10^6$ psi and an electrical resistivity of $7.5 \times 10^{-3}$ $\Omega$cm. Subsequently improved fibres were obtained by the use of mesophase pitch (see for example British Patent Specification No. 1416614). These fibres are essentially graphitic with a high degree of alignment (greater than 90%) of the graphite planes along the length of the fibre. Consequently they have both a higher tensile modulus (typically $3.5 \times 10^7$ psi) and a lower resistivity (typically $1.2 \times 10^{-3}$ $\Omega$cm) than the non-mesophase fibres.

Because of their lower electrical resistivity, the mesophase fibres are the type which would be preferred for use in sodium sulphur cells. However mesophase fibres as commercially available have certain drawbacks.

Both mesophase and non-mesophase pitch-based fibres are produced from a liquid, the fibres being produced, for example by melt-spinning techniques, and the liquid phase material is converted by heat treatment into carbon fibres. Thus it is not possible to form a textile material before the fibres are carbonised and hence the material cannot be made into a felt by needle-punching prior to carbonisation. For this reason one form in which the mesophase material is commercially sold is a low density mat comprising a number of thin webs superimposed one above the other, the fibres being aligned in the webs and hence being essentially two-dimensionally orientated. Material in this form has two particular disadvantages when considered for use in the cathode structure of a sodium sulphur cell. Firstly the most convenient method of forming the sulphur electrode from such a sheet results in the electrode having almost all the fibres oriented perpendicular to the current flow and therefore giving substantially higher electrical resistance than would be the case if the fibres were oriented in the direction of current flow. Secondly, as will be explained later, the individual fibres are subjected to bending forces. Whilst mesophase-pitch-based carbon fibres have a very high tensile strength, the elongation to break is low, and compression of the material either across the direction of the fibres or in the direction of the fibres to cause bending stresses, results in fibre breakage and consequential loss of resilience and conductance in the material.

However, the improvement in cathode material utilisation in a sodium sulphur cell which is often seen with the use of mesophase-pitch-based carbon fibres makes their continued use attractive.

In order more fully to explain the above-mentioned disadvantages of mesophase-pitch-based fibres, it is necessary to consider further the construction of sodium sulphur cells. In a flat plate cell, the electrode structure is arranged as a sheet, of thickness small compared with its linear dimensions, between a flat electrolyte plate and a current collector. Sheets as described above with two dimensionally orientated fibres have the fibres in the wrong direction for optimum electrical conductance across the cathode structure between the electrolyte and current collector. More commonly sodium sulphur cells are of tubular form with the cathode electrode structure in an annular region adjacent one surface of an electrolyte tube. The electrode structure may be inside or outside the electrolyte tube, but in each case it is in an annular region between the surface of the electrolyte and a cylindrical current collector. Again, the two-dimensionally orientated fibres of the sheets as described above, in any simple method of assembly, result in the fibres extending parallel to the electrolyte surface instead of in the preferred direction from the electrolyte surface to the current collector.

In sodium sulphur cells, a particularly convenient method of forming a cathode electrode is to compress the matrix material either before or after impregnation with sulphur or with sodium polysulphides in liquid form, then to cool the material to below the freezing point of the liquid so as to form a solid preform. One or more such preforms may be assembled into a sodium sulphur cell and, when the cell is brought up to the operating temperature, the liquid melts and, by the resilience of the fibre material, the electrode structure expands into close contact with the electrolyte and the current collector. With mesophase-pitch-based fibres, the high tensile modulus of the fibres is accompanied by low elongation to break. The compression necessary to form such preforms results in fibres being subjected to bending moments with consequent fibre breakage. If the fibres were perpendicular to the plane of the sheet, compression in this direction would also subject the fibres to bending moments because of fibre buckling, resulting again in fibre breakage. Thus, if mesophase-pitch-based fibres are to be used in a sodium sulphur cell, the low elongation to break of the material is a drawback, particularly if preforms are used requiring compression of the material.

In FR—A—2341950, which corresponds to the aforementioned U.S. 4,118,545, there is disclosed a sulphur electrode for a sodium sulphur cell formed from a mat of fibre material comprising an intimate mixture of loose fibres of graphite and alumina. These fibres are packed in an annular cathodic region of a sodium sulphur cell and may be needled to form a felt.

According to one aspect of the present invention, a method of making a sulphur electrode for a sodium sulphur cell from a mat of needled fibre material is characterised by comprising the steps of forming a mat of randomly oriented fibres with each fibre in a two-dimensional plane parallel to the general plane of the mat, said fibres comprising at least 90% by weight of mesophase-pitch-based carbon fibres; and then needle-punching the mat, the needle-punching being transverse to the plane of the mat. It has been found that, by needle-punching mesophase-pitch-based fibre material perpendicular to the plane of the mat, a proportion of the fibres are re-aligned transversely to this plane and improvements in conductivity in this direction of up to 300% have been observed. Thus the needle-punching of a two-dimensional mat of mesophase-pitch-based fibres gives a very significant improvement in the performance of this material as an electrode structure when used in a sodium sulphur cell with the aforementioned two-dimension mat generally parallel to the plane of the electrolyte surface.

In one form of the invention, the mat of fibres consists wholly of mesophase-pitch-based fibres which have been needle-punched as described above.

The needle-punching on its own however, whilst giving a significant improvement over existing cathode structures using mesophase-pitch-based fibres, does not given any improvement in the resilience.

In a preferred form of the invention, the mat comprises between 90 and 99% by weight of mesophase-pitch-based carbon fibres, the remaining fibres being of a material having a higher resistance to bending than the mesophase-pitch-based carbon fibres. The said remaining fibres may be non-mesophase-pitch-based carbon fibres. They may be fibres of an electrically conductive material but this is not essential. The said remaining fibres may be of an electrically non-conductive material. These said remaining fibres may be for example glass or ceramic fibres. The introduction of these further fibres having a much higher resistance to bending results in a significant improvement in the resilience of the mat. Using 10% by weight of non-mesophase-pitch-based carbon fibres in a mat of mesophase-pitch-based fibres has been found to give an improvement in the resilience of the order of 100%. The introduction of these further fibres in general will not significantly affect the conductivity. The conductivity however in the direction transverse to the plane of the mat is improved, as previously described, by the needle-punching which re-aligns a proportion of the fibres in the required direction.

The non-mesophase-pitch-based carbon fibres may be distributed through the body of the mat or may form a layer on one or both surfaces thereof.

One particularly advantageous arrangement which may be used in some cases is to use electrically non-conducting fibres, e.g. alumina fibres, which do not have greater resistance to bending, in addition to the non-mesophase-pitch-based fibres and to arrange these on one surface of a sheet of the carbon fibres to form the mat. The higher electrical resistance near the electrolyte surface gives an improved distribution of the electrochemical reaction through the cathodic region.

In some cases it may be preferred to use electrically non-conducting fibres as the sole addition to the mesophase-pitch-based fibres, i.e. without the addition of non-mesophase-pitch-based carbon fibres. In these cases the resilience of the material will not be improved significantly but the improved electrochemical reaction distribution may be considered advantageous.

The invention furthermore includes within its scope a method of making a sodium sulphur cell having a cathode structure of needled fibre material impregnated with sulphur and/or sodium polysulphides and arranged between a surface of a solid electrolyte material and a surface of a current collector spaced away from the electrolyte surface characterised by the steps of making a mat of randomly arranged fibres with each fibre in a two-dimensional plane parallel to the general plane of the mat, said fibres comprising at least 90% by weight mesophase-pitch-based carbon fibres, needle-punching the mat perpendicularly to the plane of the mat to re-align a proportion of fibres, and inserting the mat, after impregnation with sulphur and/or sodium polysulphides, in the cell between the aforementioned surfaces to constitute said cathode structure with the plane of the mat parallel to the electrolyte surface and the re-aligned fibres extending transversely to that surface. As indicated above, preferably between 1 and 10% of the fibres in the mat are of a material having a greater resistance to bending than the mesophase-pitch-based carbon fibres, these further fibres being needled into the mat by the needle-punching operation.

For a tubular cell, the mat may be arranged into an annular preform comprising one or more segments by impregnating the mat with sulphur in liquid form, compressing the mat before or after impregnation to the required shape and cooling the mat to solidify the sulphur. The segments may be of trapezoid form in section as described in the United States Patent Specification No. 4,176,447.

The invention also includes within its scope a cathode structure for a sodium sulphur cell comprising a mat of needled fibre material characterised in that said mat is formed of randomly oriented fibres, with each fibre in a two-dimensional plane parallel to the general plane of the mat, said fibres comprising at least 90%, by weight, of mesophase-pitch-based carbon fibres, the mat having been subjected to needle-punching transversely to the plane of the mat to re-align a proportion of the fibres transversely to this plane.

The invention furthermore includes within its scope a sodium sulphur cell having a cathodic region between one surface of a solid electrolyte and a facing surface of a cathode current collector, which cathodic region contains a mat of needled fibre material characterised in that said mat comprises at least 90% by weight of mesophase-pitch-based carbon fibres, the mat being of randomly oriented fibres, each in a two-dimensional plane parallel to the general plane of the mat, which fibres have been needle-punched transversely to the plane of the mat thereby to re-align a proportion of the fibres transversely to said plane, and the mat being arranged in the cell with said plane generally parallel to said one surface of the electrolyte.

In the following description, reference will be made to the accompanying drawings in which:—

Figure 1 is a diagrammatic cross-section through a tubular sodium sulphur cell forming one embodiment of the invention; and

Figure 2 is a cross-section through a fibre assembly for forming a cathode structure for a sodium sulphur cell.

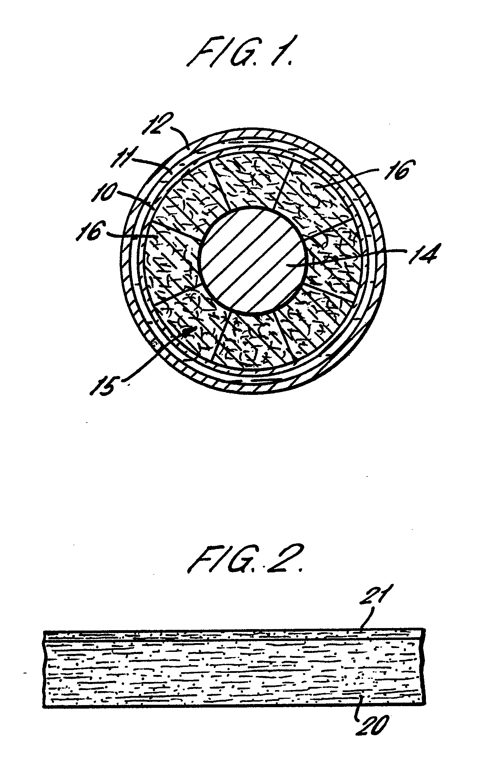

Referring to Figure 1 there is shown a sodium sulphur cell comprising a tube 10 of solid electrolyte material, typically beta-alumina, which separates an anodic region from a cathodic region. In this particular cell, the anodic region containing liquid sodium 11 lies around the outside of the electrolyte tube 10 in an annular region between that tube and an outer metal casing 12 forming an anode current collector. Capillary means may be provided in the anodic region to ensure that the outer surface of the electrolyte tube is wetted by a thin layer of liquid sodium. The cathode current collector 14 extends axially down the length of the electrolyte tube and the cathodic region between this current collector 14 and the electrolyte tube 10 contains a cathode structure comprising a fibre matrix 15 formed as a plurality of segments 16 each of which is of substantially trapezoidal section.

The present invention is concerned more particularly with the cathode structure. This cathode structure is formed of a sheet of mesophase-pitch-based carbon fibre material, for example material sold under the name Thornel VMA ("Thornel" is a Registered Trade Mark), which has the fibres each in a two-dimensional plane parallel to the general plane of the sheet. The sheet is flexible but may be considered initially as being a flat sheet. Additional fibres are put on one or both surfaces of the sheet, these fibres being preferably carbon fibres but being fibres which have substantially greater resistance to bending than the mesophase-pitch-based carbon fibres. Such fibres will in general have a lower tensile strength and they may have a lower electrical conductivity than the mesophase-pitch-based carbon fibres. As one example of a suitable material for the additional fibres, we have employed T101T carbon fibres made by Kureha Kagaku Kogyo K.K., these being non-mesophase-pitch-based fibres.

The mat with the additional fibres is needle-punched so as to needle these further fibres into the mat. This needle-punching at the same time causes a proportion of the mesophase-pitch-based carbon fibres to be re-aligned transversely to the general plane of the mat. The mat is then formed into the trapezoidal segments, for example in the manner described in the aforementioned United States Specification No. 4,176,447. This is done essentially by compression of the mat transversely to its plane, for example, by using shaped moulds. The moulds may be heated and the mat can then be impregnated at the same time as it is compressed. Alternatively it may be impregnated before compression with the cathodic reactant. The impregnation is conveniently with liquid sulphur but it is alternatively possible to use liquid polysulphides. Whilst still compressed, the mat is cooled so as to form a solid block. This enables the segments to be handled and to be inserted into the annular region of the cell between the electrolyte and cathode current collector. When the cell is heated to the operating temperature, the cathodic reactant is raised above its melting point permitting the fibre material of the mat to expand resiliently into good contact with the electrolyte surface and the current collector. It is convenient to compress the material as a sheet in a substantially flat plane. The trapezoidal segments conveniently therefore each have a pair of straight parallel sides which, when put in the cell, have to conform to circular arcs. The segments must be slightly smaller than the annular region into which they are put in order to facilitate assembly and thus the expansion, by reason of the resilience of the fibre material, when the reactant is melted, is necessary to ensure good contact with the electrolyte and the current collector.

The needling of the material gives a very substantial improvement in conductivity perpendicular to the plane of the mat compared with a mat having the two-dimensionally oriented fibres parallel to the plane of the mat. The needling further introduces the additional fibres into the matrix material which gives a significant improvement in the resilience of the mat. In a typical example in which non-mesophase-pitch-based carbon fibres amounting to 10% by weight of the total material in the mat were introduced into a mat formed of mesophase carbon fibres, an improvement of 100% in resilience has been obtained. This improvement in resilience ensures good contact between the surfaces of the mat and the surfaces of the electrolyte and current collector.

The non-mesophase-pitch-based fibres might be mixed with the mesophase-pitch-based fibres but, for convenience of manufacture, it is preferred to put these further fibres on one or both surfaces of a sheet of mesophase-pitch-based fibres. In some cases it may also be preferred to include non-conductive fibres on one surface of the mat in addition to the non-mesophase-pitch-based carbon fibres to form a layer of reduced electrical conductivity (compared with the rest of the mat) at the surface which is to be adjacent the electrolyte material in the cell. One construction of this kind is illustrated in Figure 2 which is a section (to an enlarged scale compared with Figure 1) through a mat of fibre material, for forming a cathode structure for a sodium sulphur cell, prior to needling and impregnating with the cathodic reactant, i.e. sulphur or sodium polysulphides. In Figure 2, the bulk of the material, shown at 20, is a mesophase-pitch-based carbon fibre such as Thornel VMA ("Thornel" is a Registered Trade Mark) but, over one surface of the mat is a layer 21 of alumina fibres and non-mesophase-pitch-based carbon fibres. It is preferred to use a polycrystalline alumina in a transitional form with a small percentage of other inorganic oxides as crystal phase stabilisers, for example, material sold under the Registered Trade Mark "Saffil". This material is microporous and has a large surface area. It is electrically non-conductive. It is chemically inert to sulphur/polysulphides forming the cathodic reactant. It has a further advantage that, at the operating temperature of the cell, it is more easily wetted by the polysulphides than is the carbon material. The layer 21 of alumina fibres and non-mesophase-pitch-based carbon fibres is thin compared with the carbon fibre sheet 20, the alumina being less than 10% by weight of the total fibre content.

The needle-punching results in re-alignment of some of the fibres of the three materials. The re-alignment of the carbon fibres gives a very substantial improvement in electric conductivity measured in the direction between electrolyte and current collector, i.e. normal to the sheet. The thin layer of alumina fibres however causes the cathode structure to have a higher electrical resistance nearer the electrolyte; this is desirable to give a better distribution of the electrochemical reaction through the body of the fibre matrix. The non-mesophase-pitch-based carbon fibres give the desired improvement in resilience of the structure compared with a cathode structure using only mesophase-pitch-based carbon fibres.

**Claims**

1. A method of making a sulphur electrode for a sodium sulphur cell from a mat of needled fibre material characterised by comprising the steps of forming said mat as a mat of randomly oriented fibres with each fibre in a two-dimensional plane parallel to the general plane of the mat, said fibres comprising at least 90% by weight of mesophase-pitch-based carbon fibres, and then needle-punching the mat, the needle-punching being transverse to the plane of the mat.

2. A method as claimed in claim 1 characterised in that said mat is formed wholly of mesophase-pitch-based carbon fibres.

3. A method as claimed in claim 1 characterised in that said mat comprises between 90 and 99% by weight of mesophase-pitch-based carbon fibres, the remaining fibres being of a material having a higher resistance to bending than the mesophase-pitch-based carbon fibres.

4. A method as claimed in claim 1 characterised in that said mat comprises between 90 and 99% by weight of mesophase-pitch-based carbon fibres, the remaining fibres being of an electrically non-conductive material.

5. A method as claimed in claim 3 characterised in that said remaining fibres are non-mesophase-pitch-based carbon fibres.

6. A method as claimed in claim 3 characterised in that said remaining fibres are fibres of an electrically conductive material.

7. A method as claimed in claim 3 characterised in that said remaining fibres are glass or ceramic fibres.

8. A method as claimed in claim 3 characterised in that the mat is formed with said remaining fibres mixed with said mesophase-pitch-based carbon fibres.

9. A method as claimed in claim 3 characterised in that the mat is formed of a sheet of said mesophase-pitch-based carbon fibres with said remaining fibres on one or both surfaces of the sheet.

10. A method as claimed in claim 4 characterised in that said remaining fibres are arranged on one surface of the sheet.

11. A method as claimed in claim 4 characterised in that said remaining fibres are of glass or ceramic.

12. A method as claimed in any of claims 3 to 9 characterised in that, for use in a tubular cell, the mat is arranged as an annular preform comprising a plurality of segments by impregnating the mat with sulphur in liquid form, compressing the mat before or after impregnation to the required shape and then cooling the mat to solidify the sulphur.

13. A method of making a sodium sulphur cell having a cathode structure of needled fibre material impregnated with sulphur and/or sodium polysulphides and arranged between a surface of a solid electrolyte material and a surface of a current collector spaced away from the electrolyte surface characterised by the steps of making a mat of randomly arranged fibres with each fibre in a two-dimensional plane parallel to the general plane of the mat, said fibres comprising at least 90% by weight mesophase-pitch-based carbon fibres, needle-punching the mat perpendicularly to the plane of the mat to re-align a proportion of fibres, and inserting the mat, after impregnation with sulphur and/or sodium polysulphides, in the cell between the aforementioned surfaces to constitute said cathode structure with the plane of the mat parallel to the electrolyte surface and the re-aligned fibres extending transversely to that surface.

14. A method as claimed in claim 13 characterised in that between 1 and 10% of the fibres in the mat are of a material having a greater resistance to bending than the mesophase-pitch-based carbon fibres, these further fibres being needled into the mat by the needle-punching operation.

15. A method as claimed in claim 14 characterised in that the mat is formed as a sheet of mesophase-pitch-based fibres with said fibres of a material having a greater resistance to bending and being fibres of an electrically non-conducting material arranged on one surface of said sheet, to form a layer adjacent the electrolyte when the impregnated mat is inserted in the cell.

16. A cathode structure for a sodium sulphur cell comprising a mat of needled fibre material characterised in that said mat is formed of randomly oriented fibres, with each fibre in a two-dimensional plane parallel to the general plane of the mat, said fibres comprising at least 90% by weight, of mesophase-pitch-based carbon fibres, the mat having been subjected to needle-punching transversely to the plane of the mat to re-align a proportion of the fibres transversely to this plane.

17. A cathode structure as claimed in claim 16 characterised in that said mat is formed wholly of mesophase-pitch-based carbon fibres.

18. A cathode structure as claimed in claim 16 characterised in that between 1 and 10% by weight of the fibres are of a material having a higher resistance to bending than said mesophase-pitch-based carbon fibres.

19. A cathode structure as claimed in claim 14 characterised in that said mat is a sheet of carbon fibres having a layer of electrically non-conducting fibres on one surface thereof.

20. A cathode structure as claimed in claim 16 characterised in that between 1 and 10% by weight of the fibres comprise non-mesophase-pitch-based carbon fibres together with electrically non-conducting fibres.

21. A sodium sulphur cell having a cathodic region between one surface of a solid electrolyte and a facing surface of a cathode current collector, which cathodic region contains a mat of needled fibre material characterised in that said mat comprises at least 90% by weight of mesophase-pitch-based carbon fibres, the mat being of randomly oriented fibres, each in a two-dimensional plane parallel to the general plane of the mat, which fibres have been needle-punched transversely to the plane of the mat thereby to re-align a proportion of the fibres transversely to said plane, and in that the mat is arranged in the cell with said plane generally parallel to said one surface of the electrolyte.

22. A cell as claimed in claim 21 characterised in that the mat is wholly formed of mesophase-pitch-based carbon fibres.

23. A cell as claimed in claim 21 characterised in that the mat comprises at least 90% by weight of mesophase-pitch-based carbon fibres, the remainder comprising carbon fibres having a higher resistance to bending than the mesophase-pitch-based carbon fibres.

24. A cell as claimed in claim 21 characterised in that the mat comprises at least 90% by weight of mesophase-pitch-based carbon fibres, the remainder being fibres of an electrically non-conducting material.

25. A cell as claimed in claim 24 characterised in that said fibres of electrically non-conducting material are alumina fibres.

26. A cell as claimed in either claim 24 or claim 25 characterised in that said mat comprises a sheet of said mesophase-pitch-based fibres with the electrically non-conductive fibres on one surface of said sheet, and in that the mat is arranged in the cell with the electrically non-conductive fibres forming a layer of lower electrical conductivity, compared with the bulk of the mat, between the surface of the electrolyte and the carbon fibres.

**Patentansprüche**

1. Verfahren zur Herstellung einer Schwefelektrode für eine Natriumschwefelzelle aus einem Filz von nadelförmigem Fasermaterial, gekennzeichnet durch die folgenden Schritte: 1) Formen dieses Filzes als ein Filz mit regellos orientierten Fasern, wobei jede Faser in einer zweidimensionalen Ebene parallel zu der Hauptebene des Filzes ist und wobei die Fasern mindestens 90 Gew.-% von Kohlenstoffasern der Mesophase aus Pech umfassen und dann 2) Nadelstanzen des Filzes, wobei das Nadelstanzen quer zu der Ebene des Filzes erfolgt.

2. Verfahren nach Anspruch 1, dadurch gekennzeichnet, daß der Filz völlig aus Kohlenstoffasern der Mesophase aus Pech (mesophase-pitch-based carbon fibres) geformt ist.

3. Verfahren nach Anspruch 1, dadurch gekennzeichnet, daß der Filz zwischen 90 und 99 Gew.-% an Kohlenstofffasern der Mesophase aus Pech umfaßt und daß die übrigen Fasern ein Material sind mit höherer Biegebeständigkeit als die Kohlenstoffasern der Mesophase aus Pech.

4. Verfahren nach Anspruch 1, dadurch gekennzeichnet, daß der Filz zwischen 90 und 99 Gew.-% an Kohlenstofffasern der Mesophase aus Pech umfaßt und daß die übrigen Fasern aus einem elektrisch nicht leitenden Material sind.

5. Verfahren nach Anspruch 3, dadurch gekennzeichnet, daß die übrigen Fasern nicht Kohlenstoffasern der Mesophase aus Pech sind.

6. Verfahren nach Anspruch 3, dadurch gekennzeichnet, daß die übrigen Fasern Fasern aus elektrisch leitendem Material sind.

7. Verfahren nach Anspruch 3, dadurch gekennzeichnet, daß die übrigen Fasern Glas- oder Keramikfasern sind.

8. Verfahren nach Anspruch 3, dadurch gekennzeichnet, daß der Filz geformt wird mit den übrigen Fasern gemischt mit den Kohlenstoffasern der Mesophase aus Pech.

9. Verfahren nach Anspruch 3, dadurch gekennzeichnet, daß der Filz geformt wird aus einer Platte der Kohlenstoffasern der Mesophase aus Pech, wobei die übrigen Fasern sich auf einer oder auf beiden Oberflächen der Platte befinden.

10. Verfahren nach Anspruch 4, dadurch gekennzeichnet, daß die übrigen Fasern auf einer Seite der Platte angeordnet sind.

11. Verfahren nach Anspruch 4, dadurch gekennzeichnet, daß die übrigen Fasern aus Glas oder Keramik sind.

12. Verfahren nach einem der Ansprüche 3 bis 9, dadurch gekennzeichnet, daß der Filz zum Gebrauch in röhrenförmigen Zellen, in ringförmiger Präform angeordnet ist, die eine Vielzahl von Segmenten umfaßt durch Imprägnieren des Filzes mit Schwefel im flüssiger Form, Komprimieren des Filzes vor und nach Imprägnierung zu der erforderlichen Form und Kühlen des Filzes, um den Schwefel zu erhärten.

13. Verfahren zur Herstellung von Natriumschwefelzellen mit Kathodenstruktur aus nadelförmigem Fasermaterial imprägniert mit Schwefel und/oder Natriumpolysulfiden und angeordnet zwischen einer Oberfläche eines festen Elektrolytmaterials und einer Oberfläche eines Stromabnehmers, der von der Elektrolytoberfläche abgeteilt ist, gekennzeichnet durch folgende Schritte: Herstellen eines Filzes von regellos angeordneten Fasern, wobei jede Faser in einer zweidimensionalen Ebene parallel zur Hauptebene des Filzes ist und wobei die Fasern mindestens 90 Gew.-% an Kohlenstoffasern der Mesophase aus Pech umfassen, Nadelstanzen des Filzes senkrecht zur Ebene der Matte, um einen Anteil der Fasern wieder auszurichten und Einsetzen des Filzes nach Imprägnieren mit Schwefel und/oder Natriumpolysulfiden in die Zelle zwischen die vorher erwähnten Oberflächen, um die Kathodenstruktur zu bilden, wobei die Ebene des Filzes parallel ist zu der Elektrolytoberfläche und die wieder ausgerichteten Fasern sich quer zu dieser Oberfläche erstrecken.

14. Verfahren nach Anspruch 13, dadurch gekennzeichnet, daß zwischen 1 und 10% der Fasern in dem Filz aus einem Material sind, das eine größere Biegebeständigkeit hat als die Kohlenstoffasern der Mesophase aus Pech, wobei diese zusätzlichen Fasern in den Filz durch Nadelstanzverfahren gestanzt werden.

15. Verfahren nach Anspruch 14, dadurch gekennzeichnet, daß der Filz als Platte aus Kohlenstoffasern der Mesophase aus Pech geformt wird, wobei diese Fasern, die aus einem Material mit größerer Biegebeständigkeit und aus elektrisch nicht leitfähigem Material sind, auf einer Oberfläche der Platte angeordnet werden, um eine Schicht zu bilden, die dem Elektrolyten benachbart ist, wenn der imprägnierte Filz in die Zelle eingebracht wird.

16. Kathodenstruktur für eine Natriumschwefelzelle bestehend aus einem Filz von nadelförmigem Fasermaterial, dadurch gekennzeichnet, daß der Filz geformt wird aus regellos orientierten Fasern, wobei jede Faser in einer zweidimensionalen Ebene parallel zur Hauptebene des Filzes ist und wobei diese Fasern mindestens 90 Gew.-% an Kohlenstoffasern der Mesophase aus Pech umfassen, und daß der Filz einer Nadelstanzung unterworfen worden ist quer zu der Ebene des Filzes, um eine Anteil der Fasern quer zu dieser Ebene aufzurichten.

17. Kathodenstruktur nach Anspruch 16, dadurch gekennzeichnet, daß der Filz ganz aus Kohlenstoffasern der Mesophase aus Pech geformt ist.

18. Kathodenstruktur nach Anspruch 16, dadurch gekennzeichnet, daß zwischen 1 und 10 Gew.-% der Fasern aus einem Material bestehen mit einer höheren Biegebeständigkeit als der der Kohlenstoffasern der Mesophase aus Pech.

19. Kathodenstruktur nach Anspruch 14, dadurch gekennzeichnet, daß der Filz eine Platte aus Kohlenstoffasern ist mit einer Schicht von elektrisch nicht leitenden Fasern auf einer Oberfläche.

20. Kathodenstruktur nach Anspruch 16, dadurch gekennzeichnet, daß zwischen 1 und 10 Gew.-% der Fasern Kohlenstoffasern aus Pech sind, die nicht in Mesophase sind, zusammen mit elektrisch nicht leitenden Fasern.

21. Natriumschwefelzelle mit einer Kathodenregion zwischen einer Oberfläche eines festen Elektrolyten und einer Deckoberfläche eines Kathodenstromabnehmers, wobei die kathodische Region einen Filz mit nadelförmigem Fasermaterial enthält, dadurch gekennzeichnet, daß der Filz mindestens 90 Gew.-% von Kohlenstoffasern der Mesophase aus Pech umfaßt, wobei der Filz aus regellos orientierten Fasern besteht, die in einer zweidimensionalen Ebene parallel zur Hauptebene des Filzes sind, wobei die Fasern nadelgestanzt worden sind quer zur Ebene des Filzes, wobei ein Anteil der Fasern quer zu der Ebene wieder aufgerichtet wurde, und daß der Filz in der Zelle so angeordnet ist, daß diese Ebene allgemein parallel zu der einen Oberfläche des Elektrolyten ist.

22. Zelle nach Anspruch 21, dadurch gekennzeichnet, daß der Filz völlig aus Kohlenstoffasern der Mesophase aus Pech geformt ist.

23. Zelle nach Anspruch 21, dadurch gekennzeichnet, daß der Filz aus mindestens 90 Gew.-% von Kohlenstoffasern der Mesophase aus Pech besteht und daß die übrigen Kohlenstoffasern eine höhere Biegebeständigkeit haben als die Kohlenstoffasern der Mesophase aus Pech.

24. Zelle nach Anspruch 21, dadurch gekennzeichnet, daß der Filz aus mindestens 90 Gew.-% von Kohlenstoffasern der Mesophase aus Pech besteht und daß die übrigen Fasern aus elektrisch nicht leitendem Material bestehen.

25. Zelle nach Anspruch 24, dadurch gekennzeichnet, daß die Fasern aus elektrisch nicht leitendem Material Aluminiumfasern sind.

26. Zelle nach einem der Ansprüche 24 oder 25, dadurch gekennzeichnet, daß der Filz aus einer Platte besteht von Kohlenstoffasern der Mesophase aus Pech mit elektrisch nicht leitenden Fasern auf der einen Oberfläche der Platte und daß der Filz so angeordnet ist in der Zelle, daß die elektrisch nicht leitenden Fasern eine Schicht mit geringerer elektrischer Leitfähigkeit im Vergleich mit dem Hauptteil des Filzes bilden, zwischen der Oberfläche des Elektrolyten und den Kohlenstoffasern.

**Revendications**

1. Procédé pour fabriquer une électrode de soufre pour une pile sodium-soufre à partir d'un mat de matière fibreuse aiguilletée, caractérisé en ce qu'il comprend les stades de formation dudit mat sous forme d'un mat de fibres orientées au hasard, chaque fibre étant dans un plan bidimensionnel parallèle au plan général du mat, lesdites fibres comprenant au moins 90% en poids de fibres de carbone à base de brai constitué de mésophase, puis l'aiguilletage du mat, l'aiguilletage étant transversal au plan du mat.

2. Un procédé selon la revendication 1, caractérisé en ce que ledit mat est formé entièrement de fibres de carbone à base de brai constitué de mésophase.

3. Un procédé comme revendiqué dans la revendication 1, caractérisé en ce que ledit mat comprend entre 90 et 99% en poids de fibres de carbone à base de brai constitué de mésophase, les fibres restantes étant faites d'une matière ayant une résistance à la flexion supérieure à celle des fibres de carbone à base de brai constitué de mésophase.

4. Un procédé comme revendiqué dans la revendication 1, caractérisé en ce que ledit mat comprend entre 90 et 99% en poids de fibres de carbone à base de brai constitué de mésophase, les fibres restantes étant faites d'une matière non conductrice de l'électricité.

5. Un procédé comme revendiqué dans la revendication 3, caractérisé en ce que lesdites fibres restantes sont des fibres de carbone à base de brai non constitué de mésophase.

6. Un procédé comme revendiqué dans la revendication 3, caractérisé en ce que lesdites fibres restantes sont des fibres d'une matière conductrice de l'électricité.

7. Un procédé comme revendiqué dans la revendication 3, caractérisé en ce que lesdites fibres restantes sont des fibres de verre ou de céramique.

8. Un procédé comme revendiqué dans la revendication 3, caractérisé en ce que le mat est formé avec lesdites fibres restantes mélangées avec lesdites fibres de carbone à base de brai constitué de mésophase.

9. Un procédé comme revendiqué dans la revendication 3, caractérisé en ce que le mat est formé d'une feuille desdites fibres de carbone à base de brai constitué de mésophase avec lesdites fibres restantes sur l'une ou sur les deux surfaces de la feuille.

10. Un procédé comme revendiqué dans la revendication 4, caractérisé en ce que lesdites fibres restantes sont disposées sur une surface de la feuille.

11. Un procédé comme revendique dans la revendication 4, caractérisé en ce que lesdites fibres restantes sont en verre ou en céramique.

12. Un procédé comme revendiqué dans l'une quelconque des revendications 3 à 9, caractérisé en ce que pour l'emploi dans une pile tubulaire, le mat est disposé sous forme d'une ébauche annulaire comprenant plusieurs segments par imprégnation du mat avec du soufre sous forme liquide, compression du mat à la forme désirée avant ou après l'imprégnation puis refroidissement du mat pour solidifier le soufre.

13. Un procédé pour fabriquer une pile sodium-soufre ayant une structure cathodique en matière fibreuse aiguilletée imprégnée de soufre et/ou de polysulfure de sodium et disposée entre une surface d'un électrolyte solide et une surface d'un collecteur de courant espacée de la surface de l'électrolyte, caractérisé par les stades de formation d'un mat de fibres disposées au hasard, chaque fibre étant dans un plan bidimensionnel parallèle au plan général du mat, lesdites fibres comprenant au moins 90% en poids de fibres de carbone à base de brai non constitué de mésophase, aiguilletage du mat perpendiculairement au plan du mat pour réaligner une certaine proportion des fibres et insertion du mat, après imprégnation avec du soufre et/ou des poly-, sulfures de sodium, dans la pile, entre les surfaces précitées pour constituer ladite structure cathodique avec le plan du mat parallèle à la surface de l'électrolyte et les fibres réalignées s'étendant transversalement à cette surface.

14. Un procédé comme revendiqué dans la revendication 13, caractérisé en ce qu'entre 1 et 10% des fibres du mat sont faites d'une matière ayant une résistance à la flexion supérieure à celle des fibres de carbone à base de brai constitué de mésophase, ces fibres complémentaires étant incorporées dans le mat l'opération d'aiguilletage.

15. Un procédé comme revendiqué dans la revendication 14, caractérisé en ce que le mat est formé d'une feuille de fibres à base de brai constitué de mésophase avec lesdites fibres d'une matière ayant une résistance à la flexion accrue qui sont des fibres d'une matière non conductrice de l'électricité disposées sur une des surfaces de ladite feuille, pour former une couche adjacente à l'électrolyte lorsque le mat imprégné est inséré dans la pile.

16. Une structure cathodique pour une pile sodium-soufre comprenant un mat de matière fibreuse aiguilletée, caractérisée en ce que ledit mat est formé de fibres orientées au hasard avec chaque fibre dans un plan bidimensionnel parallèle au plan général du mat, lesdites fibres comprenant au moins 90% en poids de fibres de carbone à base de brai constitué de mésophase, le mat ayant été soumis à un aiguilletage transversalement au plan du mat pour réaligner une certaine proportion des fibres transversalement à ce plan.

17. Structure cathodique comme revendiqué dans la revendication 16, caractérisé en ce que ledit mat est formé entièrement de fibres de carbone à base de brai constitué de mésophase.

18. Structure cathodique comme revendiqué dans la revendication 16, caractérisé en ce qu'entre 1 et 10% en poids des fibres sont faites d'une matière ayant une résistance à la flexion supérieure à celle desdites fibres de carbone à base de brai constitué de mésophase.

19. Structure cathodique comme revendiqué dans la revendication 14, caractérisé en ce que ledit mat est une feuille de fibres de carbone ayant sur une de ses surfaces une couche de fibres non conductrices de l'électricité.

20. Structure cathodique comme revendiqué dans la revendication 16, caractérisé en ce qu'entre 1 et 10% en poids des fibres sont constituées de fibres de carbone à base de brai non constitué de mésophase avec des fibres non conductrices de l'électricité.

21. Pile sodium-soufre ayant une région cathodique entre une surface d'un électrolyte solide et une surface en vis-à-vis d'un collecteur de courant cathodique, cette région cathodique contenant un mat de matière fibreuse aiguilletée, caractérisée en ce que ledit mat comprend au moins 90% en poids de fibres de carbone à base de brai constitué de mésophase, le mat étant fait de fibres orientées du hasard, chacune dans un plan bidimensionnel parallèle au plan général du mat, les fibres ayant été aiguilletées transversalement au plan du mat de façon à réaligner une certaine proportion des fibres transversalement audit plan, et en ce que le mat est disposé dans la pile avec ledit plan généralement parallèle à ladite surface de l'électrolyte.

22. Une pile comme revendiqué dans la revendication 21, caractérisée en ce que le mat est entièrement formé de fibres de carbone à base de brai constitué de mésophase.

23. Une pile comme revendiqué dans la revendication 21, caractérisé en ce que le mat comprend au moins 90% en poids de fibres de carbone à base de brai constitué de mésophase, le reste étant constitué de fibres de carbone ayant une résistance à la flexion supérieure à celle des fibres de carbone à base de brai constitué de mésophase.

24. Une pile comme revendiqué dans la revendication 21, caractérisée en ce que le mat comprend au moins 90% en poids de fibres de carbone à base de brai constitué de mésophase, le reste étant des fibres d'une matière non conductrice de l'électricité.

25. Une pile comme revendiqué dans la revendication 24, caractérisée en ce que lesdites fibres de matière non conductrice de l'électricité sont des fibres d'alumine.

26. Une pile comme revendiqué dans l'une quelconque des revendications 24 ou 25, caractérisée en ce que ledit mat comprend une feuille desdites fibres à base de brai constitué de mésophase avec les fibres non conductrices de l'électricité sur une surface de ladite feuille et en ce que le mat est disposé dans la pile avec

17     **0 020 061**     18

des fibres non conductrices de l'électricité formant une couche de conductivité électrique plus faible par rapport à l'ensemble du mat, entre la surface de l'électrolyte et les fibres de carbone.

FIG. 1.

FIG. 2.